# EUROPEAN PATENT APPLICATION

(11) **EP 1 318 369 A2**
(43) Date of publication of application: **11.06.2003**
(21) Application number: 02026931.2
(22) Date of filing: 03.12.2002
(51) Int. Cl.: F27B 9/28

(54) **Apparatus for heat treating an optical fibre**

(30) Priority: 03.12.2001 KR 2001075780
(71) Applicant: SAMSUNG ELECTRONICS CO., LTD., Suwon-City, Kyungki-do (KR)
(72) Inventor: Oh, Sung-Koog, Samsung Elect. Co., Ltd., Suwon-city, Kyungki-do (KR); Kim, Jin-Han, Samsung Elect. Co., Ltd., Suwon-city, Kyungki-do (KR); Lee, Jae-Ho, Samsung Elect. Co., Ltd., Suwon-city, Kyungki-do (KR)
(74) Representative: Grünecker, Kinkeldey, Stockmair & Schwanhäusser Anwaltssozietät

(57) **Abstract**

Disclosed is an apparatus for low polarization mode dispersion. The apparatus is operative to draw an optical fiber from a prepared preform using a draw tower and includes (a) a main heating source serving to heat the preform; and, (b) a stationary auxiliary heating source disposed below the main heating source, adjacent to the optical fiber drawn from the preform, for serving to locally and periodically heating the drawn optical fiber so as to remove residual stresses from the optical fiber, thereby minimizing polarization mode dispersion.

## Description

### BACKGROUND OF THE INVENTION

### 1. Field of the Invention

The present invention relates to an apparatus for drawing an optical fiber from an optical fiber preform, and more particularly to an apparatus for minimizing the Polarization Mode Dispersion (PMD) effect.

### 2. Description of the Related Art

In general, a process for manufacturing an optical fiber is divided into two steps, i.e., a first step of manufacturing an optical preform and a second step of drawing a strand of an optical fiber from the preform. Since the current trend is to draw an optical fiber in large quantities from a single preform, there is a need to manufacture an optical preform having a larger diameter, or produce a more stable and effective optical fiber drawing apparatus.

During the drawing process, a phoneme known as Polarization Mode Dispersion (PMD) occurs which tend to broadens an optical signal pulse of light propagated along the optical fiber, thereby increasing bit error rate in the propagated light which in turn becomes a leading factor for limiting the transmission rate of data via the optical fiber. The Polarization Mode Dispersion is generated by an interaction between the physical properties of the optical fiber and the polarization states of light propagated along the optical fiber. The light used in optical transmission along the optical fiber takes the form of electromagnetic waves. An ideal symmetrical "single mode" optical fiber can support two independent, degenerate modes of orthogonal polarization. If the polarization axes of two modes are orthogonal to each other (90° phase difference) and the amplitudes of two modes are the same, two vectors of the two polarization waves can be propagated as a form of a helical superposition. That is, there are two principle axes of polarization modes in a single optical fiber, and ideally, two principle axes must be orthogonal to each other. The directions of the two polarization axes are determined by the stress generated when drawing the optical fiber from the optical preform.

As such, when the orthogonal condition of two polarization axes is disrupted by various factors, the difference between the refractive indices of two polarization waves are generated and their difference is called "birefringence". The difference between the refractive indices of two polarization waves causes a difference in the light transmission propagated along two modes and changes a relative phase difference between the light transmission of the two modes. Due to the aforementioned birefringence of the optical fiber, two polarization portions of light tend to propagate with different propagation constants. As a result, the propagated light traveling along the optical fiber will be dispersed.

As described above, the Polarization Mode Dispersion (PMD) is caused by geometrical properties of a core of the optical fiber and the internal residual stresses of the optical fiber. Moreover, the Polarization Mode Dispersion is affected by external stresses such as spooling, twisting, and thermal distribution of the optical fiber. Further, the residual stresses of the optical fiber generated during the drawing of an optical fiber from the preform comprises thermal stress, which is caused by a difference between the material properties of the core and clad of the optical fiber, and mechanical stresses caused by the drawing tension of the optical fiber from the optical preform. Therefore, various methods have been developed to reduce the residual stresses of the optical fiber using a heat treatment and to change the refractive indices to form optical grating devices. For example, a known method involves controlling the Polarization Mode Dispersion (PMD) by applying a rotation on the optical fiber defined by the number of turns per unit length of the fiber during the drawing process. As a result, each of the two polarization states alternate between slow and fast states along the fiber lengths. Accordingly, although the Polarization Mode Dispersion is locally generated in the optical fiber, the total Polarization Mode Dispersion in the unit length of the optical fiber can be minimized. Other examples are disclosed in the following patent publications:WO8300232, USP5298047, USP5418881, USP5704960, USP5943466, and USP6148131. USP6189343 relates to a method for inducing the twist of an optical fiber by rotating a coating applicator.

Apparatus used in the aforementioned conventional methods must be in contact with the optical fiber in order to apply the spin to the optical fiber during the drawing process. However, in order to reduce the Polarization Mode Dispersion adequately, the number of twists per unit length of the optical fiber must be sufficient. If excessive turns are applied to the optical fiber, the vibrations in the fiber may cause a damage to the coating of the optical fiber or generate cracks in the optical fiber. Moreover, the turning effect applied to the optical fiber by the physical contact of the apparatus with the fiber may provide a mechanical damage on the surface of the fiber, thereby reducing the strength of the optical fiber. Furthermore, in drawing the optical fiber from the preform at a high speed, it is difficult to control the drawing of the optical fiber due to the vibration generation when the optical fiber is drawn from the preform at a high speed,

### SUMMARY OF THE INVENTION

The present invention overcomes the above-described problems, and provides additional advantages, by providing a method and apparatus for minimizing the Polarization Mode Dispersion effect during the drawing of an optical fiber from an optical preform, by reducing the residual stresses in the fiber without contacting the fiber.

According to one aspect of the invention, an apparatus for drawing an optical fiber from an optical preform using a draw tower includes: (a) a main heating source serving to heat the preform; and, a stationary auxiliary heating source disposed below the main heating source adjacent to the optical fiber drawn from the preform for serving to locally and periodically heat the drawn optical fiber so as to remove the residual stresses from the optical fiber, thereby minimizing polarization mode dispersion.

According to another aspect of the present invention, there is provided to an apparatus for drawing an optical fiber from a prepared preform, installed on a draw tower, comprising (a) a main heating source serving to heat the preform; and, (b) a stationary laser disposed below the main heating source adjacent to the optical fiber drawn from the preform for serving to locally and periodically heat the drawn optical fiber so as to remove the residual stresses from the optical fiber, thereby minimizing polarization mode dispersion.

### BRIEF DESCRIPTION OF THE DRAWINGS

The above features and other advantages of the present invention will be more clearly understood from the following detailed description taken in conjunction with the accompanying drawings, in which:
Fig. 1 schematically depicts an optical fiber drawing system employing an apparatus for minimizing the polarization mode dispersion (PMD) in accordance with the present invention;
Fig. 2 schematically depicts an apparatus for minimizing the polarization mode dispersion in accordance with a first preferred embodiment of the present invention;
Fig. 3 schematically depicts an apparatus for minimizing the polarization mode dispersion in accordance with a second preferred embodiment of the present invention;
Fig. 4 schematically depicts an apparatus for minimizing the polarization mode dispersion in accordance with a third preferred embodiment of the present invention;
Fig. 5 is a graph showing a stress distribution state in an optical fiber manufactured by a conventional optical fiber drawing system; and,
Fig. 6 is a graph showing a stress distribution state in an optical fiber after the heat treatment using the apparatus in accordance with the present invention.

### DETAILED DESCRIPTION OF THE PREFERRED EMBODIMENTS

Now, preferred embodiments of the present invention will be described in detail with reference to the annexed drawings. In the drawings, the same or similar elements are denoted by the same reference numerals even though they are depicted in different drawings. For the purposes of clarity and simplicity, a detailed description of known functions and configurations incorporated herein will be omitted as it may make the subject matter of the present invention rather unclear.

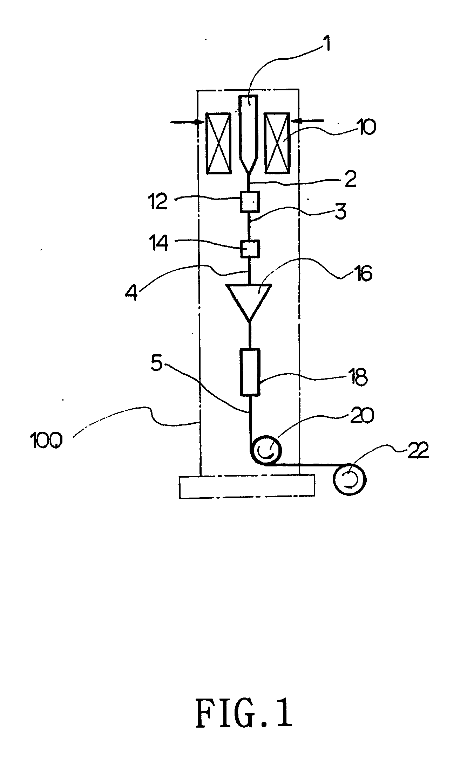

Fig. 1 schematically depicts an optical fiber drawing system for minimizing polarization mode dispersion (PMD) effect in accordance with the present invention. As shown in Fig. 1, the optical fiber drawing system is made of an upright draw tower 100. Several apparatuses are successively and vertically aligned within the draw tower 100 executing successive steps of an optical fiber drawing process. In the draw tower 100, a preform 1 is prepared along a vertical axis of the draw tower 100 and passes through a first furnace 10 to be melted at a sufficiently high temperature (for example, approximately 2,000 Celsius). Then, a strip of an optical fiber 2 is drawn from the preform 1. The drawn optical fiber 2 passes through the heat treatment prior to coating. That is, heat means 12 is provided between the furnace 10 and a coating applicator 16. Preferably, the heat means 12 serves as an auxiliary heating source to reheat the drawn optical fiber 2, thereby alleviating any mechanical stress generated during the cooling of the drawn optical fiber 2. A temperature measurer 14 is provided in order to measure the temperature of the heat-treated optical fiber 3.

The reheated optical fiber 3 passes through a coating applicator 16 to be coated with a tube clad. The coated optical fiber 3 passes though a UV(ultraviolet) hardening device 18. The tube clad of the optical fiber 3 is made of a polymer, which is hardened by UV light. Reference numeral 5 denotes a completely coated optical fiber.

Thereafter, the optical fiber 5 passes through a capstan 20 and is then wound on a winder 22. The capstan 20 provides a drawing force against the preform 1, thereby drawing the optical fiber 2 having a designated diameter from the preform 1. The capstan 20 provides the draw force for drawing the optical fiber 2 from the preform 1 in a downward direction..

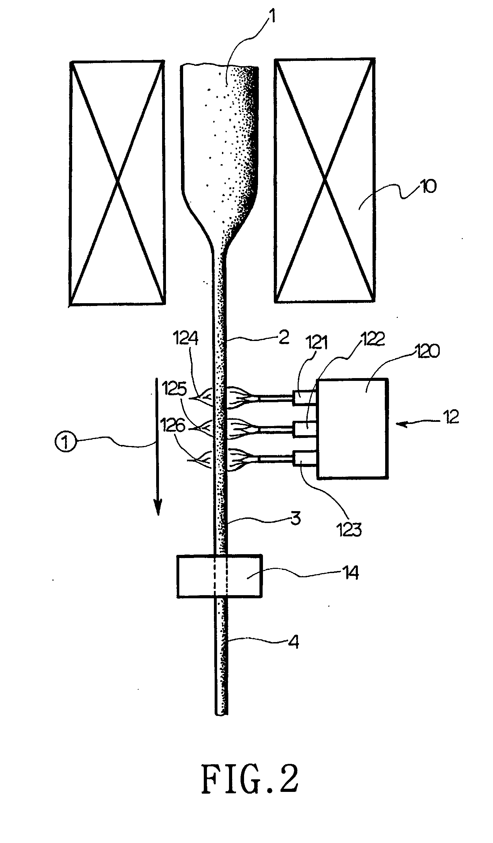

Referring to Fig. 2, the configuration of an apparatus for minimizing polarization mode dispersion in accordance with a first preferred embodiment of the present invention is described in detail. As shown in Fig. 2, the apparatus for minimizing polarization mode dispersion comprises a main heating source 10 and a stationary auxiliary heating source 12. The main heating source 10 serves to heat the preform 1, and the stationary auxiliary heating source 12 serves to heat the optical fiber 2 drawn from the preform 1. The stationary auxiliary heating source 12 is stationery unit Both the main heating source 10 and the auxiliary heating source 12 have the same function as the heating the fiber in which the main heating source 10 serves to heat the preform 1 and the auxiliary heating source 12 serves to heat the drawn optical fiber 2.

Meanwhile, the auxiliary heating source 12 for secondarily supplying heat to the drawn optical fiber 2 comprises at least one oxygen/hydrogen torches 121, 122, and 123 and are stacked vertically. Further, a flow controller 120 is connected to the oxygen/hydrogen torches 121, 122, and 123, thereby controlling the flow rates of the fuel supplied to the oxygen/hydrogen torches 121, 122, and 123.

Preferably, at least one of the oxygen/hydrogen torches 121, 122, and 123 is aligned along the longitudinal direction of the drawn optical fiber 2, thereby periodically heating the drawn optical fiber 2 in order to change the temperature and stress distributions of the drawn optical fiber 2. The drawn optical fiber 2 is heated by flames 124, 125, and 126 emitted from the oxygen/hydrogen torches 121, 122, and 123.

The temperature measurer 14 is further provided to the optical fiber drawing system below the oxygen/hydrogen torches 121, 122, and 123, thereby precisely measuring the temperature of the heated optical fiber 3. The temperature measurer 14 measures the temperature of the heated optical fiber 3 and supplies the measured data to a controller (not shown), thereby adjusting a ratio of the flow rates of oxygen and hydrogen, and a distance between the oxygen/hydrogen torches 121, 122, and 123 and the optical fiber 2. Then, the controller compares the supplied data to a designated standard temperature, thereby adjusting the flow rate of the flow controller 120 connected to the oxygen/hydrogen torches 121, 122, and 123, more particularly the strength of the flames 124, 125, and 126 emitted from the oxygen/hydrogen torches 121, 122, and 123 by adjusting the distance relative to the fiber. Thereafter, the optical fiber 4 proceeds to the coating applicator (not shown).

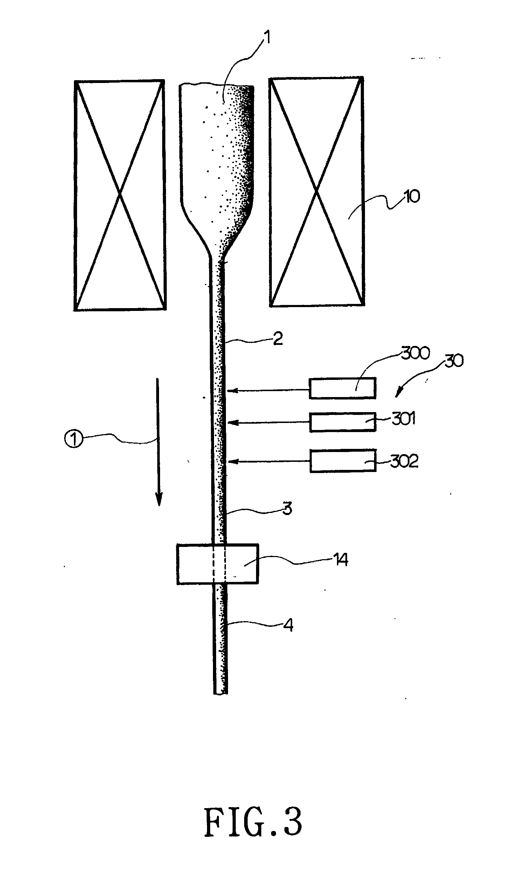

Referring to Fig. 3, the configuration of an apparatus for minimizing polarization mode dispersion in accordance with a second preferred embodiment of the present invention is described in detail. As shown in Fig. 3, the apparatus for minimizing polarization mode dispersion comprises the main heating source 10 serving to heat the optical preform 1 and a stationary auxiliary heating source 30 serving to heat the optical fiber 2 drawn from the preform 1. Both the main heating source 10 and the auxiliary heating source 30 have the same function of the heating fiber. In particular, the main heating source 10 serves to heat the preform 1 and the auxiliary heating source 30 serves to heat the drawn optical fiber 2. Meanwhile, the auxiliary heating source 30 for secondarily supplying heat to the optical fiber 2 drawn from the preform 1 comprises lasers 300, 301, and 302. The number of the lasers 300, 301, and 302 is at least one, and preferably, the lasers 300, 301, and 302 are vertically stacked along the longitudinal direction of the optical fiber 2. Preferably, each laser of the lasers 300, 301, and 302 is a high-power laser such as a CO₂ laser.

In the embodiment, at least one of the lasers 300, 301, and 302 is aligned along the longitudinal direction of the drawn optical fiber 2, thereby periodically heating the drawn optical fiber 2 to change the temperature and stress distributions of the drawn optical fiber 2. The drawn optical fiber 2 is heated by the light emitted from the lasers 300, 301, and 302. That is, the lasers 300, 301, and 302 periodically irradiate light on the drawn optical fiber 2, thereby supplying a heat treatment to the optical fiber 2. In order to periodically supply the heat treatment to the optical fiber, the lasers 300, 301 and 302 repeatedly turn on and off.

Moreover, the temperature measurer 14 is further provided to the drawing system below the lasers 300, 301, and 302, thereby precisely measuring the temperature of the heated optical fiber 3. The temperature measurer 14 measures the temperature of the heated optical fiber 3 and supplies the measured data to a controller (not shown), thereby adjusting the strength of light emitted from the lasers 300, 301, and 302, and the distance between the lasers 300, 301, and 302 and the optical fiber 2. The data measured by the temperature measurer 14 is supplied to the controller (not shown). Then, the controller compares the supplied data to a designated standard temperature, thereby adjusting the strength of light emitted from the lasers 300, 301, and 302, the distance between the lasers 300, 301, and 302 and the optical fiber 2. Thereafter, the optical fiber 4 proceeds to the coating applicator (not shown).

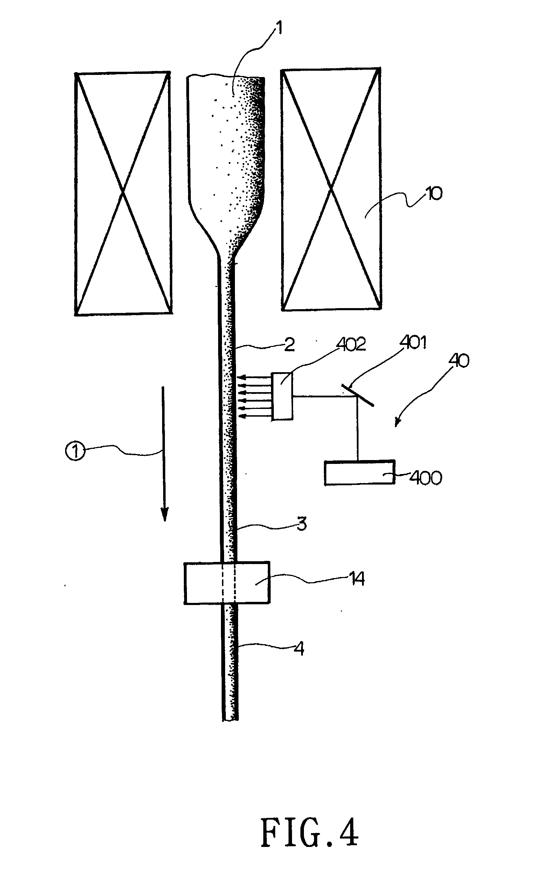

Referring to Fig. 4, the configuration of an apparatus for minimizing polarization mode dispersion in accordance with a third preferred embodiment of the present invention is described in detail. As shown in Fig. 4, the apparatus for minimizing polarization mode dispersion comprises the main heating source 10 serving to heat the preform 1 and a stationary auxiliary heating source 40 serving to heat the optical fiber 2 drawn from the preform 1. Both the main heating source 10 and the auxiliary heating source 40 have the same function of heating the fiber. In particular, the main heating source 10 serves to heat the preform 1 and the auxiliary heating source 40 serves to heat the drawn optical fiber 2.

Meanwhile, the auxiliary heating source 40 for secondarily supplying heat to the optical fiber 2 drawn from the preform 1 comprises a laser 400, a mirror 401, and an optical system 402. The mirror 401 serves to reflect the light emitted from the laser 400 at a designated angle. The optical system 402 serves to periodically divide and irradiate the light reflected by the mirror 401 to the drawn optical fiber 2. Herein, a laser beam splitter is used as the optical system 402.

The temperature measurer 14 is further provided to the drawing system below the laser 400, thereby precisely measuring the temperature of the heated optical fiber 3. The temperature measurer 14 measures the temperature of the heated optical fiber 3 and supplies the measured data to a controller (not shown), thereby adjusting the strength of the light emitted from the laser 400, and the distance between the laser 400 and the optical fiber 2. The controller compares the supplied data to a designated standard temperature, thereby adjusting the strength of the laser 400 and the distance between the laser 400 and the optical fiber 2 in order to periodically change the temperature and stress distributions of the drawn optical fiber 2. Thereafter, the optical fiber 4 proceeds to the coating applicator (not shown) for subsequent process.

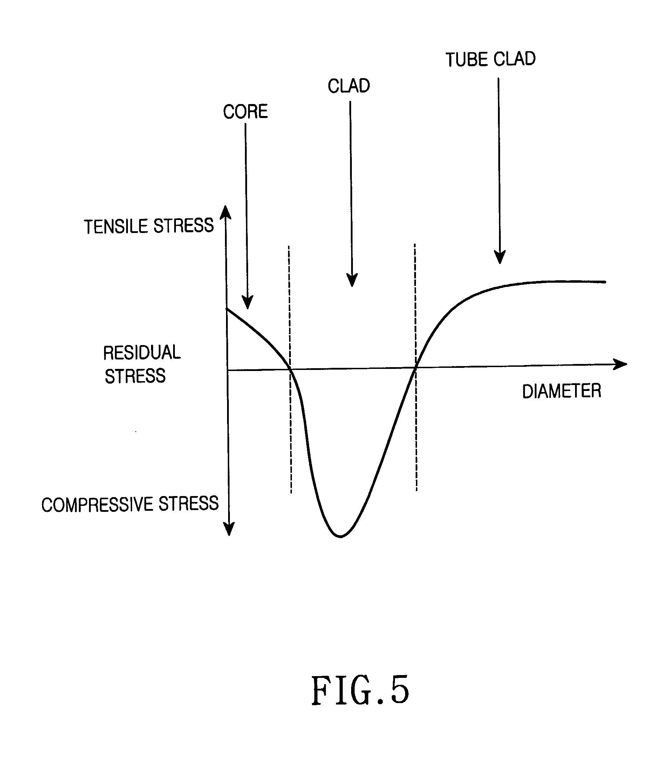

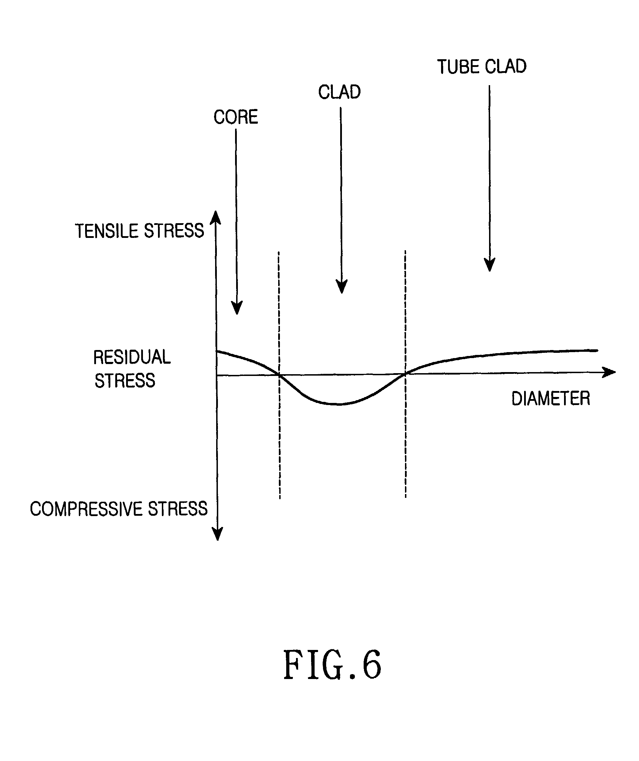

Referring to Figs. 5 and 6, the distributions of residual stresses of the optical fiber before and after the heat treatment are described in detail to show the advantages of the inventive apparatus. Comparing the graphs of Figs. 5 and 6, it can be appreciated that the residual stresses in the drawn optical fiber are differently distributed in accordance to the inventive drawing system. That is, the strength of the residual stress of the heat-treated optical fiber is reduced as shown in the core, the clad, and the tube clad. In general, the residual stresses are typically high in the core and the clad of the optical fiber. Asymmetries of the residual stresses in the optical fiber tend to change two polarization axes of the optical fiber, thereby disrupting an orthogonal condition of two polarization axes and causing birefringence. As a result, the Polarization Mode Dispersion is generated. However, as shown in Figs. 5 and 6, the apparatus of the present invention reduces the residual stresses in the drawn optical fiber during the drawing of the fiber from the preform through a double heat application at two different stages, thereby minimizing the birefringence caused by asymmetries of the stresses in the optical fiber. In particular, the present invention provides an apparatus for periodically supplying a heat treatment to the optical fiber drawn from the preform, thus minimizing the residual stresses in the optical fiber. Accordingly, the present invention minimizes birefringence caused by asymmetries of the stresses in the optical fiber and in turn minimizes the Polarization Mode Dispersion.

Although only a few embodiments of the present invention have been described in detail, those skilled in the art will appreciate that various modifications, additions, and substitutions to the specific elements are possible, without departing from the scope and spirit of the invention as disclosed in the accompanying claims.

## Claims

1. An apparatus for drawing an optical fiber (5) from an optical preform (1) in an optical drawing tower (100), comprising:
(a) a heating source (10) for heating the optical preform (1) to draw a strip of the optical fiber (2); and
(b) a stationary auxiliary heating (12) source for periodically heating the optical fiber (2) heated by the heating source (12) to remove residual stresses from the optical fiber (2), thereby minimizing polarization mode dispersion.

2. The apparatus as set forth in claim 1, wherein the stationary auxiliary heating source (12) includes at least one heating unit along a drawing direction of the optical fiber (2).

3. The apparatus as set forth in claims 1 or 2, wherein the stationary auxiliary heating source (12) comprises an oxygen/hydrogen torch (121,122,123).

4. The apparatus as set forth in claims 1, 2 or 3, further comprising a temperature measurer (14) disposed below the stationary auxiliary heating source (12) for detecting the temperature of the optical fiber (2) heated by the heating source (12).

5. The apparatus as set forth in one of the previous claims, wherein the stationary auxiliary heating source (12) is disposed between the main heating source (10) and a coating applicator.

6. The apparatus as set forth in one of the previous claims, wherein the stationary auxiliary heating source (12) includes a flow controller (120) to control the output of the stationary auxiliary heating source (12) based on the detected temperature.

7. The apparatus as set forth in one of the previous claims, wherein the stationary heating source (12) includes a plurality of heating units (121,122,123) stacked vertically along a drawing direction of the optical fiber (2).

8. The apparatus as set forth in one of the previous claims, wherein the stationary auxiliary heating source (12) selectively applies a heat application to change the temperature and stress distributions of the optical fiber (2).

9. The apparatus as set forth in one of the previous claims, further comprising a controller coupled to the temperature measurer (14) to selectively adjust the distance between the stationary auxiliary heating source (12) and the optical fiber (2) based on a comparison of the detected temperature to a predetermined value.

10. The apparatus of one of the previous claims, wherein the stationary auxiliary heating source (12) comprises at least one stationary laser (300,301,302) for periodically heating the optical fiber (2) received from the heating source (10) to remove residual stresses from the optical fiber (2), thereby minimizing polarization mode dispersion.

11. The apparatus as set forth in claim 10, wherein the stationary laser (300,301,302) comprises a high-power CO₂ laser.

12. The apparatus as set forth in claims 10 or 11, further comprising an optical system (402) between the stationary laser (400) and the drawn optical fiber (2).

13. The apparatus as set forth in claim 12, wherein the optical system (402) comprises:
a mirror (401) for reflecting light emitted from the laser (400) at a predetermined angle; and
a laser beam splitter for irradiating the light reflected by the mirror (401) to the optical fiber (2).

14. The apparatus as set forth in claim 13, wherein the laser beam splitter is installed near the optical fiber (2).
